(19) Europäisches Patentamt
European Patent Office
Office européen des brevets

(11) Publication number: 0 389 208 A1

(12) # EUROPEAN PATENT APPLICATION

(21) Application number: 90302903.1

(22) Date of filing: 19.03.90

(51) Int. Cl.$^5$: B32B 17/10, C08J 5/12, C03C 27/12

(30) Priority: 20.03.89 JP 65988/89

(43) Date of publication of application: 26.09.90 Bulletin 90/39

(84) Designated Contracting States: DE FR GB

(71) Applicant: NIPPON ZEON CO., LTD.
6-1, 2-chome, Marunouchi, Chiyoda-ku
Tokyo(JP)

(72) Inventor: Hori, Toshihiko, c/o Kenkyo Kaihatsu Center
Nippon Zeon Co., Ltd., 2-1, Yako 1-chome
Kawasaki-shi, Kanagawa-ken(JP)
Inventor: Nakamura, Eitaro, c/o Kenkyo Kaihatsu Center
Nippon Zeon Co , Ltd., 2-1, Yako 1-chome
Kawasaki-shi, Kanagawa-ken(JP)

(74) Representative: Myerscough, Philip Boyd et al
J.A.Kemp & Co. 14, South Square Gray's Inn
London, WC1R 5EU(GB)

(54) **Interlayer for laminated safety glass.**

(57) Interlayer for laminated safety glass comprising epoxy group-containing vinyl chloride resin, and N-acylalkyleneimine type polymer or its partially saponified derivative.

EP 0 389 208 A1

## Interlayer for Laminated Safety Glass

This invention relates to an interlayer for laminated safety glass. More detailedly, this invention relates to an interlayer for laminated safety glass which interlayer is excellent in penetration resisting strength, good in adhesive strength and has an improved moisture resistance.

It is widely known to use membrane made of plasticized polyvinyl butyral as an interlayer for preparation of laminated safety glass. The plasticized polyvinyl butyral membrane is excellent in adhesive strength, light resisting stability, transparency and flexibility, and now widely utilized in safety glass for automobiles, aircrafts and architecture.

However, this plasticized polyvinyl butyral membrance has a low resistance to moisture and hygroscopic moisture, and thus by a long-term use of the laminated glass the membrane absorbs water to foam or whiten, lowers value of the commodities or loses its adhesive strength to peel.

Further, although there is report that the N-acylalkyleneimine type polymer or its partially saponified derivative has by itself adhesive property to glass, and can be used as an interlayer of laminated glass, it has a drawback of poor penetration resisting property, for example due to that its adhesive strength to glass is too strong and it is brittle.

It is thought of in order to improve this drawback to use them in mixing with transparent and tenacious elastic resin. Examples of such elastic resins include ethylenic copolymers, ethylene-vinyl acetate type copolymers, ethylene-vinyl acetate-carbon monoxide type copolymers, ethylene-(meth)acrylic acid type copolymers, ionically crosslinked derivatives of ethylene-(meth)acrylic acid type copolymers, ethylene-(meth)acrylic acid alkyl ester type copolymers, ethylene-maleic acid alkyl ester copolymers, ethylene-propylene copolymers, vinyl chloride type copolymers(vinyl chloride homopolymers, vinyl chloride-olefin copolymers, vinyl chloride-vinyl acetate copolymers, etc.), polyurethanes, (meth)acrylic acid ester type syrups. However, according to the experiences of the present inventors, although laminated glass obtained in case where there was used as the interlayer a mixture of such resin and N-acylalkyleneimine type polymer is excellent in adhesive strength and penetration resisting strength, it has a drawback that its adhesive strength lowers with time lapse.

The object of this invention is to provide an interlayer for laminated glass having no such drawbacks as above-mentioned.

As a result of vigorous study on resin compositions containing vinyl chloride resin, a general purpose resin, the, present inventors have found novel interlayer for laminated glass which interlayer is excellent in properties required for the interlayer for laminated glass, namely penetration resisting strength, adhesive strength, water whitening resistance, moisture resistance, heat resistance, etc.

Thus, there is provided according to this invention an interlayer for laminated safety glass which comprises epoxy group-containing vinyl chloride resin, and N-acylalkyleneimine type polymer or its partially saponified derivative.

Typical examples of the epoxy group-containing vinyl chloride resin used in the invention include 1) copolymer prepared from vinyl chloride and monomer having epoxy group and optionally monomer copolymerizable therewith, 2) derivative of vinyl chloride copolymer wherein epoxy group is linked thereto, and 3) dispersion in vinyl chloride copolymer of epoxy group-containing resin compatible therewith.

Examples of thermonomer having epoxy group used to prepare the epoxy group-containing vinyl chloride resin of the above 1) include glycidyl ethers of unsaturated alcohol such as allyl glycidyl ether and methacryl glycidyl ether; glycidyl esters of unsaturated acid such as glycidyl methacylate, glycidyl acrylate, glycidyl p-vinylbenzoate, methyl glycidyl itaconate, glycidyl ethyl maleate, glycidyl vinylsulfonate and glycidyl (meth)allylsulfonate; epoxide olefins such as butadiene monoxide, vinylcyclohexene monoxide and 2-methyl-5,6-epoxyhexene; etc. Further, examples of the copolymerizable monomer to be optionally used include fatty acid vinyl esters such as vinyl acetate and vinyl propionate; olefins such as ethylene and propylene; vinylidene halide such as vinylidene chloride and vinylidene fluoride; vinyl ethers such as isobutyl vinyl ether, methyl vinyl ether and cetyl vinyl ether; allyl compounds such as allyl chloride and methyl allyl ether; etc.

Method well known as polymerization method of vinyl chloride such as suspension polymerization or emulsion polymerization can be adopted to obtain epoxy group-containing vinyl chloride resin to be used in the invention using such monomer. For exmaple, in case the epoxy group-containing vinyl chloride resin is used as plastisol, emulsion polymerization or microsuspension polymerization, which is frequently adopted as a preparation method of vinyl chloride resin for paste processing, is desirable in order to suitably maintain fluidity of the plastisol.

It is desired that polymerization degree of the epoxy group-containing vinyl chloride resin is 600 to

3,000. If it is smaller than 600, penetration resisting strength of the membrane lowers, whereas if it is higher than 3,000, excess heat is required to form membrane and as a result preparation cost is made higher.

The epoxy group-containing vinyl chloride resin of the above 2) is prepared by first eliminating hydrogen chloride from vinyl chloride copolymer through heat treatment or contact with alkali compound and then epoxidizing the resulting derivative with organic peracid or the like.

The epoxy group-containing resin used to prepare the epoxy group-containing vinyl chloride resin of the above 3) means, for example, copolymer of monomer having epoxy group with monomer copolymerizable therewith.

It is preferred that the epoxy group content of the epoxy group-containing vinyl chloride resin is in the range of 0.5 to 10 % by weight based on the resin. If the content is less than 0.5 % by weight, adhesive strength to glass becomes insufficient, whereas in case of an amount exceeding 10 % by weight penetration resisting strength of the membrane becomes bad. This epoxy group content based on weight of the resin comes to the range of 0.3 to 6 % by weight in the content based on weight of the membrane.

The N-acylalkyleneimine type polymer or its partially saponified derivative to be used in the invention is a linear polymer containing the recurring unit of the formula

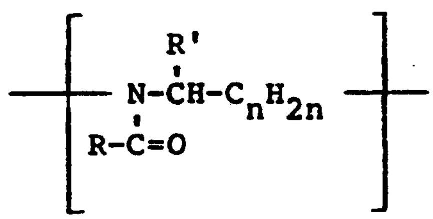

(wherein n is 1 or 2, and R and $R'$ are independently a hydrogen or $C_1$ to $C_{16}$ alkyl group or phenyl group or their halogen-substituted derivatives or alkyl($C_1$ to $C_{16}$) phenyl groups or their halogen-substituted derivatives), in an amount of at least 20 % by weight of the polymer, and having a weight-average molecular weight of 30,000 to 1,000,000. Typical example thereof is polymer of 2-ethyl or propyl-2-oxazoline or its partially saponified derivative. Specific examples of the N-acylalkyleneimine type polymer to be used in the invention, their raw materials and processes of preparation thereof, and characteristics of the obtained polymers are disclosed in "Encyclopedia of Polymer Science and Engineering, Volume 4 Second Edition", 1986, John Wiley & Sons, Inc., pp 525 to 537. The polymer can be a copolymer of 2 or more of different monomers having the structure represented by the above formula, or a copolymer of monomer having the structure represented by the above formula with alkylene glycol such as ethylene glycol or tetramethylene glycol or thioglycol corresponding thereto.

There are mixed with the epoxy group-containing vinyl chloride resin to be used in the invention, according to the purpose, plasticizer, stabilizer, ultraviolet absorber, antioxidant, lubricant, bulking agent, colorant, etc. Further, it is possible to use together another compatible resin such as vinyl chloride resin, acrylic resin or epoxy resin.

There can widely be used as plasticizers to be compounded those which are generally referred to as plasticizers for vinyl chloride, resin. For example, there are exemplified fatty acid ester type plasticizers such as dioctyl adipate, butyl diglycol adipate, dioctyl azelate, dibutyl sebacate and diisodecyl adipate; phthalic acid type plasticizers such as dioctyl phthalate, dibutyl phthalate, diisobutyl phthalate, butyl benzyl phthalate, dilauryl phthalate and diheptyl phthalate; phosphoric acid type plasticizers such as trixylenyl phosphate, tricresyl phosphate, cresyl diphenyl phosphate, tris(chloroethyl) phosphate, tributyl phosphate and tris(chloroethyl) phosphate; epoxy derivatives such as epoxidized soybean oil and epoxy fatty acid mono esters; and the like. Polyester type plasticizers can be used in some occasions. It is proper that amount of the plasticizer to be compounded is 20 to 80 weight parts per 100 weight parts of the resin. In case too much plasticizer is used strength of the membrane lowers, whereas too little plasticizer makes the membrane hard.

There are preferably used as heat stabilizers alkylated tin compounds of fatty acid such as butyltin laurate, butyltin maleate and octyltin maleate; and alkyltin-containing sulfur compounds such as bis-(isooctylthioglycolic ester)salt of dinormaloctyltin. It is also possible to use together therewith metallic soap type stabilizer.

As for ultraviolet absorbers those of benzotriazole are excellent, and for example there are suitably used 2-(2′-hydroxy-5′-methylphenyl)benzotriazole, 2-(2′-hydroxy-3′-tertiary-butyl-5′-methylphenyl)-5-chlorobenzotriazole, 2-(2′-hydroxy-3′,5′-tertiary-butylphenyl)-5-chloro-benzotriazole, 2-(2′-hydroxy-4′-octoxyphenyl)-

benzotriazole, etc.

As antioxidants phenolic antioxidants are excellent, and there are mentioned, for example 2,6-di-tertiary-butyl-p-cresol, 2,2′-methylenebis(4-methyl-6-tertiary-butyl-phenol), 4,4′-butylidenebis(3-methyl-6-tertiary-butyl-phenol), 4,4′-thiobis (3-methyl-6-tertiary-butyl-phenol), etc.

Further, there can be compounded, if necessary, crosslinking agent, thickener, diluting agent, silane type or titanium type coupling agent, and the like.

It is preferred that the N-acylalkyleneimine type polymer or its partially saponified derivative is used in an amount of such range that the content of the recurring unit of the formula

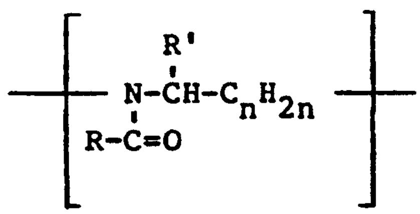

(wherein n is 1 or 2, and R and R′ are independently hydrogen or a $C_1$ to $C_{16}$ alkyl group or a phenyl group or their halogen-substituted derivatives or alkyl ($C_1$ to $C_{16}$) phenyl groups or their halogen-substituted derivatives) is 0.1 to 10 % by weight based on weight of the membrane. In case of 0.1 % by weight or less of the content the effect of water whitening resistance decreases, whereas in 10 % by weight or more adhesive strength to glass is liable to become too large.

Since adhesive strength of the membrane to glass is determined according to amount of the above recurring unit and the amount of epoxy group contained in the membrane, amounts of the above recurring unit and epoxy group are adjusted in accordance with the necessitated adhesive strength.

There can be applied as preparation method of the interlayer of the invention membrane forming and processing methods of vinyl chloride resin which have hitherto been known. For example, there can be mentioned a method which comprises dispersing the epoxy group-containing vinyl chloride resin and the N-acylalkyleneimine type polymer or its partially saponified derivative in plasticizer or the like to form a plastisol or organosol, and casting it on parting paper or directly on glass plate followed by heating; and a method which comprises mixing the epoxy group-containing vinyl chloride resin, the N-acylalkyleneimine type polymer or its partially saponified derivative, plasticizer, stabilizer and the like, and forming membrane by a method such as extrusion or calendering.

As the method wherein the N-acylalkyleneimine type polymer or its partially saponified derivative is dispersed in the plastisol or organosol among the former methods using plastisol or organosol, there can be mentioned a method which comprises adding under mixing the N-acylalkyleneimine type polymer or its partially saponified derivative into a water dispersion of the epoxy group-containing vinyl chloride resin obtained by aqueous polymerization and spray-drying the mixture, and preparing a plastisol or organosol using the resulting resin mixture; a method comprising adding a solution of the N-acylalkyleneimine type polymer or its partially saponified derivative in organic solvent such as methanol or water in the process of preparation of plastisol or organosol of the epoxy group-containing vinyl chloride resin, and mixing the mixture; or the like.

It is sufficient for preparing laminated safety glass using the thus prepared interlayer of the invnetion to superpose the interlayer between glass plates and fuse then under heating and pressure, according to conventional method having hitherto been referred to as sheet method. It is suitable that temperature of the heating is 80 to 200 °C, usually 100 to 180 °C. It is sufficient that the pressure is a pressure necessary for making the interlayer and the glass plates adhere and removing foams in the interfaces and interlayer, and the pressure is suitably 5 to 15 kg/$cm^2$. There can be used in fusion under heating and pressure apparatus which has hitherto been used to prepare laminated glass using plasticized polyvinyl butyral membrane as an interlayer, for example, a heating and pressing machine, press roller equipped with heating furnace, hydraulic or pneumatic autoclave, or the like.

As a method having higher productivity, laminated glass can also be prepared by a method which com prises applying onto one side or both sides of a glass plate a plastisol prepared by dispersing in plasticizer the epoxy group-containing vinyl chloride resin and the N-acylalkyleneimine type polymer or its partially saponified derivative, heating the plastisol to prepare a glass plate with membrane, laminating another glass plate onto surface of the membrane, and heating the resulting product; or a method which comprises filling the above plastisol between plural glass plates and heating it.

Thus according to the present invention, there can be obtained excellent interlayer for laminated safety

glass having adhesive property to glass stable with time lapse and good penetration resisting property due to the epoxy group-containing vinyl chloride resin as well as high adhesive strength to glasses, excellent water whitening resistance and excellent moisture resistance due to the N-acylalkyleneimine type polymer or its partially saponified derivative.

The present invention is more specifically described below according to examples. Parts and % in example and comparative examples are based on weight unless otherwise defined.

Figure 1 as the attached drawing is a graph wherein there is plotted data obtained in adhesive strength test (moisture resistance test) on the samples for measurement of adhesive strength of Example 1 and Comparative examples 1 to 3.

Example 1

To 100 parts of epoxy group-containing vinyl chloride resin of average polymerization degree of 1,000 consisting of 92 % of vinyl chloride, 3 % of glycidyl methacylate and 5 % of ethylene were added 10 parts of dioctyl phthalate, 30 parts of dioctyl adipate, 4 parts of dibutyltin polymercaptide, 0.3 part of 2,2′-methylene-bis(4-methyl-6-tertiary-butylphenol) and 4 parts of polyethyloxazoline (molecular weight 50,000), and the mixture was sufficiently mixed. The mixture was then kneaded on twin roll heated at 150 °C for 10 minutes to obtain transparent and flexible membrance (interlayer) having a thickness of 0.8 mm.

The above interlayer and polyethylene terephthalate film having a thickness of 20 micrometers were placed in this order on a glass baseplate of 15 cmx 5 cm and a thickness of 3 mm and a cover glass (2 mm thick) was put thereon to prepare a laminated material 1. Separately, the above interlayer was put between two glass plates of 30 cmx 30 cm and a thickness of 3 mm to prepare a laminated material 2. The laminated material was prepared in number of two. These laminated materials were placed in a rubber bag respectively, and inside of the bag was reduced was maintained under reduced pressure at 120 °C for 30 minutes to carry out preliminary contact bonding. Then, contact bonding with heating was carried out in a pneumatic autoclave under the condition of 140 °C and 13 to 15 $kg/cm^2$ for 30 minutes. Finally, the cover glass of the laminated material 1 was removed.

Thus, there were obtained one sample ① for measurement of adhesive strength (having a structure wherein the interlayer and the polyethylene terephthalate film were laminated on the glass baseplate), and two samples of the transparent laminated glass derived from the laminated material 2.

Example 2

The procedures of Example 1 were repeated except that polyisopropyloxazoline (molecular weight: 90,000) was used in place of polyethyloxazoline of Example 1, and thereby were obtained one sample ② for measurement of adhesive strength and two laminated glass samples.

Example 3

Epoxy group-containing vinyl chloride resin (100 parts) which has an average particle size of 1 micrometer and an average polymerization d of 1,200 and consists of 94 % of vinyl chloride and 6 % of glycidyl methacrylate, 15 parts of dioctyl phthalate, 45 parts of dioctyl adipate, 4 parts of dibutyltin polymercaptide, and 0.3 part of 2,2′-methylenebis(4-methyl-6-tertiary-butylphenol) were placed in a vacuum high speed deaerator and mixed. Then, a solution of 4 parts of polymethyloxazoline (molecular weight: 270,000) in 6 parts of methanol was added to the above plastisol, followed by mixing and defoaming.

The thus prepared plastisol was applied onto a glass baseplate of 15 cm x 5 cm and a thickness of 3 mm to a paint film thickness of 0.8 mm using a doctor blade coater. A polyethylene terephthalate film having a thickness of 20 micrometers was stuck thereon so that bubbles did not remain, and the whole matter was heated at 180 °C for 30 minutes to cause gelation, and thereby one sample ③ for measurement of adhesive strength was obtained.

Similarly, a paint film of the plastisol having a paint film thickness of 0.8 mm was formed on a glass plate of 30 cm x 30 cm and a thickness of 3 mm using a blade coater. A glass plate having the same size was stuck thereon so that bubbles did not remain, and the whole matter was heated at 180 °C for 30 minutes to cause gelation, whereby two transparent laminated glass samples.

Example 4

The same precedures as in Example 1 were made except that polyethyloxazoline partially saponified with sodium hydroxide (saponification degree: 6 mol %) was used in place of polyethyloxazoline of Example 1, and thereby were obtained one sample ④ for measurement of adhesive strength and two laminated glass samples.

Comparative example 1

Commercially available interlayer (thickness: 30 mil) made of polyvinyl butyral and for laminated glass was subjected to humidity conditioning so that the water content was 0.5 %.

The resulting interlayer, a polyethylene terephthalate having a thickness of 20 micrometers and a cover glass (thickness: 2 mm) were laminated in this order on a glass baseglass of 15 cm x 5 cm and a thickness of 3mm to prepare a laminated material 1. Separately, the above interlayer was put between two glass plates of 30 cm x 30 cm and a thickness of 3 mm to prepare a laminated material 2. The laminated material was prepared in number of 2. These laminated materials were passed through a rubber roller respectively to conduct preliminary conduct bonding. Then, contact bonding with heating was carried out in a pneumatic autoclave at 130 °C and at 13 to 15 $kg/cm^2$. Finally, the cover glass was removed from the laminated material 1. Thus there were obtained one sample ⑤ for measurement of adhesive strength and two laminated glass samples.

Comparative example 2

The same procedures as in Example 1 were made except that vinyl chloride-ethylene copolymer (ethylene content 5 %, average polymerization degree 900) was used in place of the vinyl chloride-glycidyl methacrylate-ethylene copolymer of Example 1, whereby there were obtained one sample ⑥ for measurement of adhesive strength and two laminated glass samples.

Comparative example 3

The same procedures as in Example 1 were made except that the polyethyloxazoline was not added, and thereby were obtained one sample ⑦ for measurement of adhesive strength and two laminated glass samples.

Test example

Evaluation of membrance was carried out according to the following methods using each two laminated glass samples and each one sample for measurement of adhesive strength obtained in each example and each comparative example.

[1] Heat resistance

One of the laminated glass samples was allowed to stand under a circumstance of 130 °C for 2 hours, and then generation of bubbles and presence of discoloration and turbidness were observed. The results were shown in Table 1.

[2] Penetration resisting strength

The other laminated glass sample was measured for penetration resisting strength according to a method based on "Test Method of Automobile Safety Glass" of JIS R3212. Namely, the laminated glass sample was allowed to stand in an atomosphere of 20 °C for 2 hours, 2.27 kg of a steel ball was dropped on the center of the sample from a height of 4 m, and presence of penetration was observed. The results

were shown in Table 1.

[3] Adhesive strength (Moisture resistance)

After previously measured for T-peel adhesive strength, the sample for measurement of adhesive strength was immersed in warm water of 80 °C and measured for survival rate of adhesive strength every time lapse of 10 minutes, and presence of whitening was observed after the time lapse of 60 minutes. The results were shown in Table 1. Further, a graph showing change of survival rate of adhesive strength in accordance with lapse of immersion time was prepared based on the data of Table 1, and attached as Figure 1.

Table 1

| Example | Sample for measurement of adhesive strength | Moisture resistance (Survival rate of adhesive strength [%]) | | | | | | Presence of whitening | Heat resistance | Penetration resisting strength |
|---|---|---|---|---|---|---|---|---|---|---|
| | | 10 min. | 20 min. | 30 min. | 40 min. | 50 min. | 60 min. | | | |
| Example 1 | ① | 75 | 50 | 38 | 30 | 25 | 23 | Not present | No abnormality | Not penetrated |
| Example 2 | ② | 68 | 45 | 30 | 30 | 23 | 20 | Not present | No abnormality | Not penetrated |
| Example 3 | ③ | 80 | 65 | 53 | 38 | 30 | 25 | Not present | No abnormality | Not penetrated |
| Example 4 | ④ | 83 | 72 | 60 | 55 | 50 | 38 | Not present | No abnormality | Not penetrated |
| Comparative example 1 | ⑤ | 27 | 15 | 8 | 8 | 8 | 8 | Not present | Foaming at the peripheral part | Not penetrated |
| Comparative example 2 | ⑥ | 20 | 10 | 8 | 8 | 8 | 8 | Present | No abnormality | Not penetrated |
| Comparative example 3 | ⑦ | 58 | 38 | 25 | 15 | 10 | 8 | Present | No abnormality | Not penetrated |

## Claims

1. An interlayer suitable for use in a laminated safety glass comprising an epoxy group-containing vinyl chloride resin, and an N-acylalkyleneimine type polymer or a partially saponified derivative thereof.

2. An interlayer according to claim 1 wherein said epoxy group-containing vinyl chloride resin is (1) a copolymer obtainable from vinyl chloride and a monomer having an epoxy group and optionally a monomer copolymerizable therewith, (2) a derivative of a vinyl chloride copolymer wherein an epoxy group is linked thereto, or (3) a dispersion in vinyl chloride copolymer of an epoxy group-containing resin compatible therewith.

3. An interlayer according to claim 1 or 2 wherein said epoxy group-containing vinyl chloride resin contains 0.5 to 10 % by weight of epoxy groups.

4. An interlayer according to anyone of claims 1 to 3 wherein said N-acylalkyleneimine type polymer containing at least 20 % by weight of a repeating unit represented by the formula:

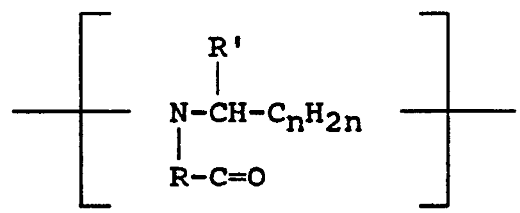

(wherein n is 1 or 2, and each of R and R′ are independently hydrogen, optionally halogen-substituted $C_1$ to $C_{16}$ alkyl or optionally halogen-substituted phenyl, or an optionally halogen-substituted alkyl ($C_1$ to $C_{16}$) phenyl group.

5. An interlayer according to claim 4 wherein the interlayer contains 0.1 to 10 % by weight of said repeating unit.

6. An interlayer according to anyone of claims 1 to 5 wherein said N-acylalkyleneimine type polymer or partially saponified derivative thereof is a polymer of 2-ethyl or propyl-2-oxazoline or of a partially saponified derivative thereof.

7. A laminated safety glass comprising an interlayer as claimed in any one of the preceding claims.

FIG. 1

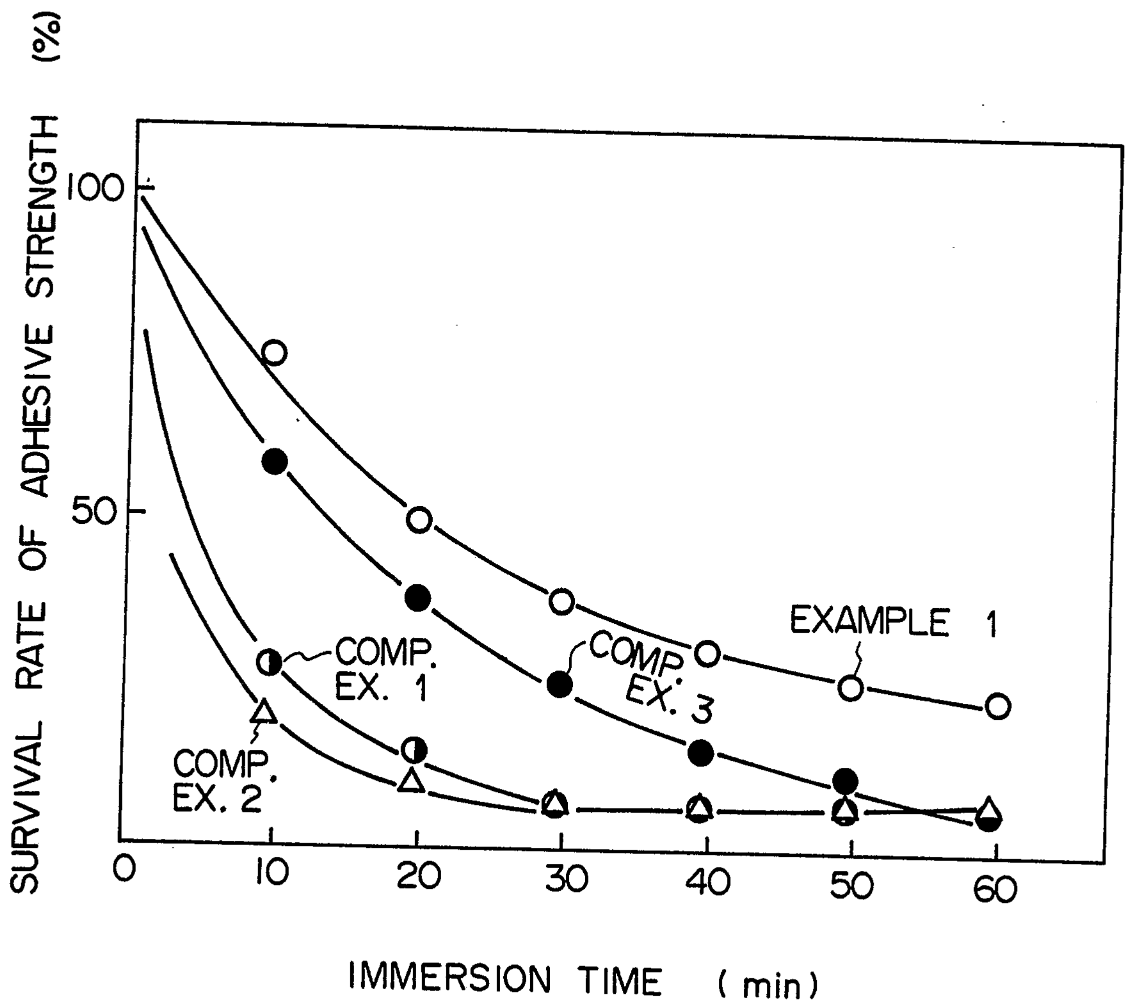
SURVIVAL RATE OF ADHESIVE STRENGTH (%)
100
50
0
10
20
30
40
50
60
EXAMPLE 1
COMP. EX. 1
COMP. EX. 2
COMP. EX. 3
IMMERSION TIME (min)

European Patent Office

# EUROPEAN SEARCH REPORT

Application number

EP 90302903.1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | AT - B - 343 843 (GLAVERBEI) * Page 4, lines 48-41; page 5, lines 8-11; page 8, lines 19-22 * -- | 1-7 | B 32 B 17/10<br>C 08 J 5/12<br>C 03 C 27/12 |
| A | GB - A - 1 273 000 (UNION CARBIDE) * Claims 1,6 * -- | 1-3 | |
| A | US - B - 494 440 (GROSS) * Claims * ---- | 4-6 | |
| | | | TECHNICAL FIELDS SEARCHED (Int Cl.5) |
| | | | B 32 B 17/00<br>C 08 J 5/00<br>C 09 J 127/00<br>C 03 C 27/00 |

The present search report has been drawn up for all claims

| Place of search | Date of completion of the search | Examiner |
|---|---|---|
| VIENNA | 28-06-1990 | ONDER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82